# EUROPEAN PATENT APPLICATION

(11) **EP 2 301 657 A2**
(43) Date of publication of application: **30.03.2011**
(21) Application number: 10172504.2
(22) Date of filing: 11.08.2010
(51) Int. Cl.: B01J 4/00, G05B 13/00

(54) **Chemical plant**

(30) Priority: 28.09.2009 JP 2009222581
(71) Applicant: Hitachi Plant Technologies, Ltd., Tokyo 170-8466 (JP)
(72) Inventor: Kato, Hajime, Tokyo 170-8466 (JP); Saito, Kimio, Tokyo 170-8466 (JP); Ito, Yuzuru, Tokyo 170-8466 (JP); Endo, Yoshishige, Tokyo 170-8466 (JP); Mori, Syuuichi, Tokyo 170-8466 (JP)
(74) Representative: Beetz & Partner

(57) **Abstract**

It is made possible to scale up the throughput of a chemical plant using microreactors (107). The chemical plant has a liquid sending line communicating with a raw material tank (101, 102) at a bifurcation of raw material and a means (117) for detecting the flow of raw material and a control valve (118) for adjusting the flow located in the line (115, 116). In each branch line (115, 116) to each of the multiple microreactors (107) connected in parallel, there are provided a means (117) for monitoring the flow rate of raw material (A, B) and a means (118) for adjusting this flow rate. A control apparatus (119) monitors the flow rate in each liquid sending line and adjusts the quantity of liquid sent from each control valve and each pump to avoid the influence of an air bubble or deposit in each line.

## Description

### Background of the Invention

The present invention relates to a chemical plant for scaling up the production throughput of a reactor (hereafter, referred to as microreactor) utilizing a minute flow path.

In recent years, research and development have been increasingly promoted on microreactors for actively applying micromachining technologies or the advantages of microscale to chemical processes. Various advantages are expected from microreactors and one of such advantages is that they make it easy to scale up a throughput. In research and development and manufacture of chemical products, usually, a production is scaled up stepwise from research at the laboratory level to mass production plant by way of product development and test plant.

In general, conditions under which chemical reaction is carried out are different between chemical reaction for a small quantity at the beaker level and chemical reaction for a large quantity in a reaction vessel for production. Therefore, a technical problem often arises in scale-up from the laboratory level to the mass production level. To avoid this problem as much as possible, a strategy has been proposed with respect to microreactors. In this strategy, multiple microreactors for small quantity processing developed and applied at the laboratory level are equipped in parallel in accordance with a required quantity at the mass production level and a throughput is thereby scaled up in a stroke. This throughput scaling-up technique in which multiple microreactors each of which is low in throughput are equipped in parallel in plant and a throughput is thereby increased may be designated as numbering-up sometimes.

In scale-up from a throughput at the laboratory level using a microreactor to a throughput at the mass production level at plant, the following is important to obtain a high-quality product: how a raw material should be uniformly distributed to each microreactor to reproduce the processing state at the laboratory level in concrete numbering-up.

In scale-up from the laboratory level to the plant level by numbering-up, the following method is often adopted as disclosed in Japanese Unexamined Patent Publication No. 2008-80306 and Japanese Unexamined Patent Publication No. 2004-344877: a method of connecting microreactors in parallel to increase the number of equipped microreactors. The greatest benefit of this parallel connected piping is that: raw material is branched from one liquid sending means (pump, header tank) and thus the cost of liquid sending facilities can be suppressed.

The following is a description of a disadvantage. A branched minute flow path may be choked due to the following: the adhesion or residue of an air bubble due to the influence of a capillary phenomenon, the deposition of a reactant in a microreactor on a flow path wall, or the like. In this case, this imbalance of flow path resistance has influence on all the other branched flow paths and a desired quantity of liquid sent to each microreactor is disturbed. In priming, that is, in an initial state in which operation is started with the raw material lines and microreactors of a plant empty to substitute raw materials for the contents of the flow paths, substitution failure may occur. In substitution failure, that is, the residue of a vapor phase in a minute flow path, there is high uncertainty with respect to when the air bubble is detached and flows downstream. This can cause degradation in the performance of chemical operation in a minute space in a microreactor.

As a means for solving problems of the deposition of a reactant in a microreactor on a flow path wall and the like, Japanese Unexamined Patent Publication No. 2008-80306 discloses a configuration in which the following is implemented: the state of sending of raw material flowing through each flow path is monitored; and based on information obtained by this monitoring, a valve and a liquid sending means are controlled to keep the flow rate of raw material flowing through each flow path at a desired value. However, when a large number of microreactors are branched and piped and connected in parallel, a change in the flow rate in some microreactor has influence on the flow rates in the other microreactors and this complicates control. The above patent document does not clearly describe a concrete control law therefor. Japanese Unexamined Patent Publication No. 2004-344877 also describes an embodiment of parallel connected piping; however, it does not give sufficient consideration to the above-mentioned adhesion or residue of an air bubble due to the influence of a capillary phenomenon.

### Brief Summary of the Invention

It is an object of the invention to solve the above problems associated with each piping system to achieve a stable state of liquid sending operation in chemical plant subjected to numbering-up by piping microreactors in parallel.

The invention is a chemical plant including multiple raw material tanks for storing raw materials and multiple reactors connected in parallel by branch lines from the individual raw material tanks. Each of branched pipes includes: a distribution flow rate detecting means for detecting the flow rate of raw material flowing through the pipe; and a distribution flow rate adjusting means for adjusting the flow rate of raw material flowing through the pipe. The chemical plant further includes a control apparatus that controls the setting of each distribution flow rate adjusting means to a target flow rate using the flow rate in the corresponding pipe detected by the corresponding distribution flow rate detecting means. This control apparatus is provided with a non-interference property providing device that renders a multiple-input multiple-output system apparently of non-interference type. The multiple-input multiple-output system is inputted with a flow rate detected by a distribution flow rate detecting means and outputs the opening of a distribution flow rate adjusting means.

It is desirable that this non-interference property providing device should have a transfer characteristic matrix expressed as the product of the following: an inverse matrix of a transfer characteristic matrix representing the relation between the input of raw material to each reactor and a distribution flow rate detected by a distribution flow rate detecting means and a diagonal matrix. It is desirable that the control apparatus should use this non-interference property providing device to provide a non-interference property with respect to each reactor and independently control the distribution flow rate adjusting means. It is desirable that the following should be provided between a bifurcation in a branch line connected to each of the raw material tanks and the raw material tank: multiple pumps that send raw material to multiple reactors; a raw material flow rate detecting means for detecting the flow rate of raw material; and a raw material flow rate adjusting means for adjusting the flow rate of raw material. It is desirable that the control apparatus should control a raw material flow rate adjusting means so as to adjust the flow rate of raw material based on a detection value detected by a flow rate detecting means.

A branch tank may be provided at a bifurcation of a branch line connected to each of the multiple raw material tanks; and multiple pipes may be connected to the branch tank and multiple reactors may be connected in parallel. A raw material tank, a pump, a branch tank, a raw material flow rate adjusting means, and a raw material flow rate detecting means may be connected in series. The chemical plant may be provided with a system adjustment unit. When the flow rate of raw material to each reactor is inputted, the system adjustment unit automatically measures a corresponding distribution flow rate. It then determines a transfer characteristic matrix from their cause and effect relationship and adjusts a control law in accordance with this transfer characteristic.

### Brief Description of the Several Views of the Drawing

FIG. 1 is a drawing of a chemical plant in an embodiment of the invention and illustrates the basic configuration thereof;
FIG. 2A is a drawing illustrating the operation of a branch tank provided in the chemical plant illustrated in FIG. 1;
FIG. 2B is another drawing illustrating the operation of the branch tank provided in the chemical plant illustrated in FIG. 1;
FIG. 2C is another drawing illustrating the operation of the branch tank provided in the chemical plant illustrated in FIG. 1;
FIG. 3A is a drawing illustrating a plant required for designing the control apparatus provided in the chemical plant illustrated in FIG. 1;
FIG. 3B is a drawing illustrating a transfer characteristic corresponding to the plant in FIG. 3A;
FIG. 3C is a drawing illustrating the plant required for designing the control apparatus provided in the chemical plant illustrated in FIG. 1;
FIG. 3D is another drawing illustrating a transfer characteristic of the non-interference property providing device in FIG. 3C;
FIG. 4A is a drawing illustrating effect obtained when a non-interference property providing device is connected to the chemical plant illustrated in FIG. 1;
FIG. 4B is another drawing illustrating effect obtained when the non-interference property providing device is connected to the chemical plant illustrated in FIG. 1;
FIG. 4C is another drawing illustrating effect obtained when the non-interference property providing device is connected to the chemical plant illustrated in FIG. 1;;
FIG. 4D is another drawing illustrating effect obtained when the non-interference property providing device is connected to the chemical plant illustrated in FIG. 1;
FIG. 4E is another drawing illustrating effect obtained when the non-interference property providing device is connected to the chemical plant illustrated in FIG. 1;
FIG. 4F is another drawing illustrating effect obtained when the non-interference property providing device is connected to the chemical plant illustrated in FIG. 1;
FIG. 5A is a drawing illustrating a plant control system for the chemical plant illustrated in FIG. 1;
FIG. 5B is another drawing illustrating a plant control system for the chemical plant illustrated in FIG. 1; and
FIG. 6 is a drawing illustrating a method for identifying a transfer characteristic of a plant in another embodiment of the invention.

### Detailed Description of the Invention

Hereafter, description will be given to chemical plants in some embodiments of the invention with reference to the drawings.

### (First Embodiment)

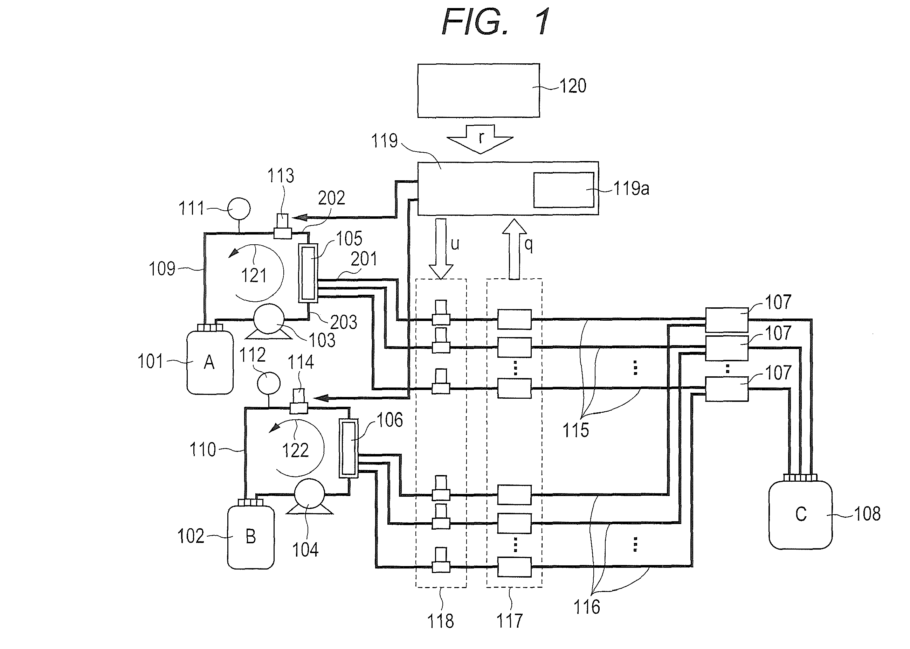

FIG. 1 illustrates the basic configuration of the piping and raw material sending control in the first embodiment of the invention. As an example of this embodiment, the following process will be taken: a two-raw material one-step reaction or mixture process in which raw material A and raw material B are mixed or reacted with each other in microreactors (reactors) to obtain product C.

In FIG. 1, liquid raw material A and liquid raw material B are respectively stored in raw material tanks 101 and 102 and respectively driven and sent by a pump 103 and a pump 104. The pumps 103, 104 respectively distribute raw material A and raw material B to each reactor 107 through branch tanks 105, 106 and liquid sending lines 115, 116 branched therefrom. The distributed raw material A and raw material B are mixed or reacted with each other in each reactor 107 and are recovered as product C into a recovery tank 108. Aside from the distributed liquid sending lines 115, 116, the branch tanks 105, 106 are provided with lines 109, 110 through which the raw materials can be returned to the respective raw material tanks 101, 102. Raw materials A, B are let to flow back through these lines.

In these lines 109, 110, there are installed raw material flow rate detecting means 111, 112 for detecting the flow rate of raw material and flow rate control valves 113, 114 as raw material flow rate adjusting means that can adjust or block this flow. Also in each liquid sending line 115, 116 connected to each reactor 107, there are installed distribution flow rate detecting means 117 for detecting a distribution flow rate and flow rate control valves 118 as distribution flow rate adjusting means for adjusting this flow rate. Information from each flow rate detecting means 111, 112, 117 is sent to the control apparatus 119 and the control apparatus 119 properly controls the opening of each control valve 113, 114, 118 in accordance with a request from a user console 120.

Description will be given to the operation of the fluid control system illustrated in FIG. 1. First, description will be given to priming carried out at the start of operation. At the start of operation, raw material has not been passed through each liquid sending line 115, 116; therefore, the flow paths are filled with air or any other gas. To completely substitute liquid raw material for the interior of the liquid sending lines in this state, this embodiment with the above-mentioned piping configuration adopts priming mode comprised of a two-stage operation pattern.

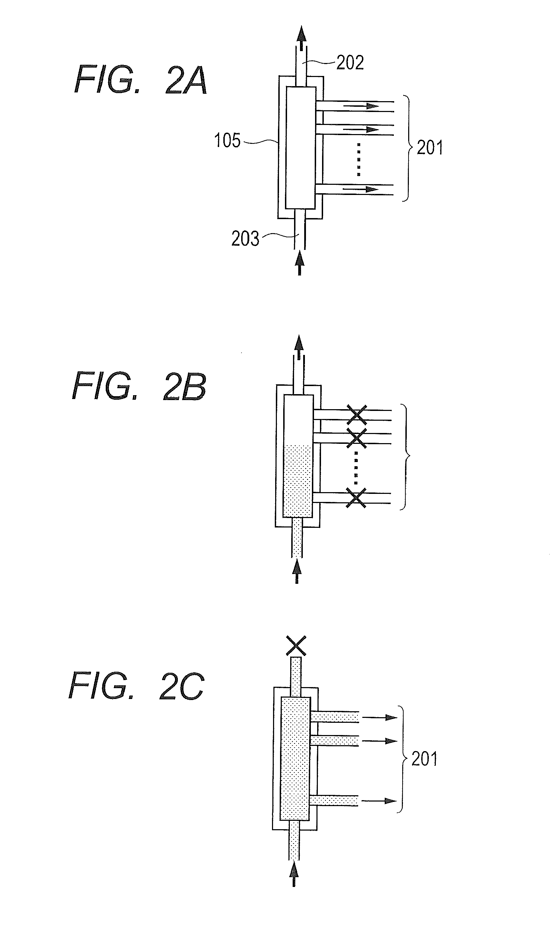

First, all the control valves 118 in the liquid sending lines to which the multiple microreactors 107 are connected are closed and the control valves 113, 114 in the lines communicating with the respective raw material tanks 101, 102 are opened. Then the pumps are operated at an appropriate flow rate. Description will be given to the operation with the branch tank 105 at this time taken as an example. FIG. 2A illustrates a state in which liquid raw material has not been filled in the tank before priming is started. It will be assumed that gravity acts downward as viewed in the plane of the drawing. The raw material is sent from the branch tank 105 through a liquid sending line 203 by the pump 103.

Though not shown in FIG. 2A, the following lines are provided with the control valves 113, 114, 118 illustrated in FIG. 1: liquid sending lines 201 (equivalent to reference numerals 115 and 116 in FIG. 1) connected to the microreactors and a line 202 (equivalent to reference numerals 109 and 110 in FIG. 1) communicating with the raw material tank 101.

The following takes place by closing the liquid sending lines 201 connected to the microreactors and opening the liquid sending line 202 communicating with the raw material tank as mentioned above: the raw material is sent so as to carry away air to the raw material tank as illustrated in FIG. 2B. At this time, the raw materials flow in the loop indicated by arrows 121, 122 in FIG. 1. Whether the contents of these loop-like liquid sending lines have been completely replaced with the raw materials is detected by the raw material flow rate detecting means 111, 112 for detecting the flows of raw materials.

When the content of the branch tank 105 is replaced with the liquid raw material (the content of the branch tank 106 is similarly replaced with the liquid raw material), the following procedure is taken in turn: all the control valves 118 in the liquid sending lines 201 to which the microreactors are connected are opened and all the control valves 113, 114 in the liquid sending lines 202 communicating with the raw material tanks are closed. As illustrated in FIG. 2C, the raw material in the branch tank 105 is sent to the microreactors by this operation.

When a certain flow rate is given in this operation in the second stage, the contents of the branch tanks 105, 106 and the lines up to the microreactors 107 and the recovery tank 108 are also replaced with liquid raw material. In the operation in the second stage, each raw material must be sent to each microreactor at a predetermined flow rate for substitution. If this flow rate is low, it is suspected that the content of any liquid sending line is not completely replaced with liquid raw material. In this case, the content of which liquid sending line has not replaced is detected by the distribution flow rate detecting means 117 for monitoring flow rates provided in the respective liquid sending lines 115, 116. When it is detected that the content of one liquid sending line has not been replaced, the control valve in that liquid sending line is kept open and all the other control valves are closed. Thus the pumping quantities of the pumps are reduced to a quantity equivalent to one line and the liquids are sent. The content of the liquid sending line is thereby replaced with liquid raw material. When there are multiple lines the contents of which could not be replaced with liquid raw material, the above operation is repeated line by line.

Description will be given to the stabilization of liquid sending state in a reaction operation mode in which reaction operation is carried out by the microreactors after the contents of the liquid sending lines are completely replaced with liquid raw material. If the individual liquid sending lines 115, 116 are ideally fabricated in the same shape, every liquid sending line has the same flow path resistance; therefore, raw materials sent from the pumps are equally distributed. In reality, however, it is almost impossible to achieve this state. In the present chemical plant (hereafter, referred to as plant), different kinds of raw materials are mixed together to produce a substance different from the original raw materials. Therefore, the physical properties of liquid may change in a microreactor and it is difficult to manage distribution at an equal flow rate and chemical reaction in each reactor only by the geometrical conditions of the flow paths. Further, there is a possibility that a reaction product is deposited and accumulates in a flow path and it causes change in the flow path resistance of the liquid sending line. To cope with cases where imbalance of flow path resistance is produced among piping flow paths from any cause as mentioned above, this embodiment adopts the control law for parallel piping system flow rate described below.

When it is desired to equally send raw material to each microreactor in the plant control system illustrated in FIG. 1, the quantity of liquid sent from a pump is determined by the expression of (a desired flow rate to be given to each liquid sending line) x (the number of microreactors arranged in parallel). If each liquid sending line is perfectly equal in flow path resistance, as mentioned above, raw material can be equally sent to each microreactor just by controlling this quantity of liquid sent from a pump. However, when imbalance is produced in this flow path resistance from any cause, it is required to take the following measure: the control valve provided in each liquid sending line is adjusted to control the flow rate of raw material flowing through the liquid sending line to a desired flow rate d.

Letting the number of microreactors arranged in parallel be n, the plant can be handled as a multiple input/output system having n inputs (the aperture of each control valve) and n outputs (the flow rate of each liquid sending line). Evidently the plant is an interference multiple input/output system. That is, the plant is a system in which the operation of some control valve has influence on not only the corresponding liquid sending line but also the flow rates of the other liquid sending lines. Therefore, if imbalance in flow path resistance is produced among the piping lines from any cause, it becomes more difficult to adjust each control valve so as to compensate this imbalance with increase in the number of the microreactors arranged in parallel.

With respect to this embodiment, to cope with this, the following control law has been devised: a control law in which this multiple input/output system is rendered of apparent non-interference type and further a feedback control system is built in each flow path.

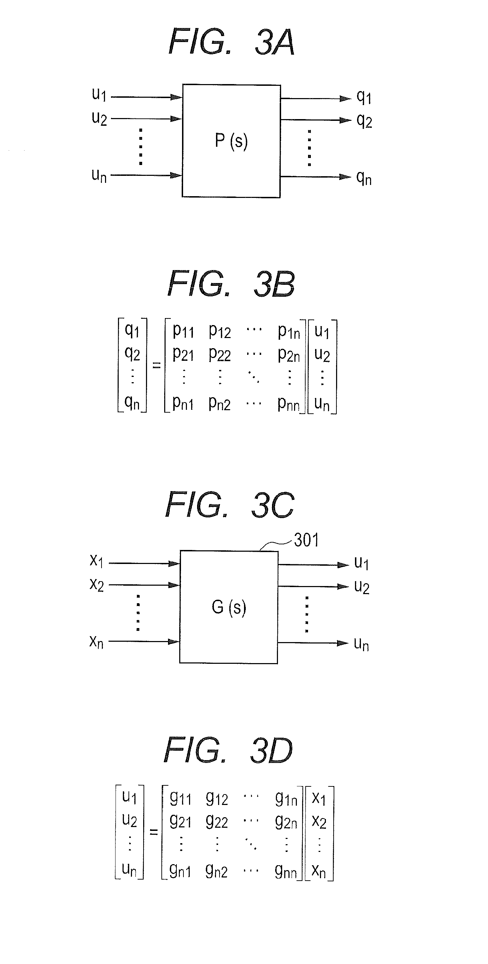

Letting the aperture of the n control valves in the plant be u (u₁, u₂, ..., uₙ) and the resultant flow rate of each liquid sending line be q (q₁, q₂, ..., qₙ), the block diagram of this input/output system is expressed as in FIG. 3A. The transfer characteristic P(s) corresponding to the system represented by this block diagram can be generally represented in the form of such transfer matrix as indicated by FIG. 3B. Though the element p_{i,j} of a transfer matrix may be a real number sometimes, in general, it is represented by a transfer function.

To render the plant of an interference n-input/output system having the input/output characteristics shown in FIG. 3A of apparent non-interference type, such an n-input/output non-interference property providing device 301 as shown in FIG. 3C is designed. The transfer characteristic of this non-interference property providing device 301 is given by such a transfer matrix shown in FIG. 3D. This non-interference property providing device 301 is characterized in that: the elements of a matrix is a design parameter of the non-interference property providing device 301 and it is designed according to a characteristic of a plant desired to be rendered of non-interference type, that is, a P(s) matrix. This design method is a characteristic point of this embodiment.

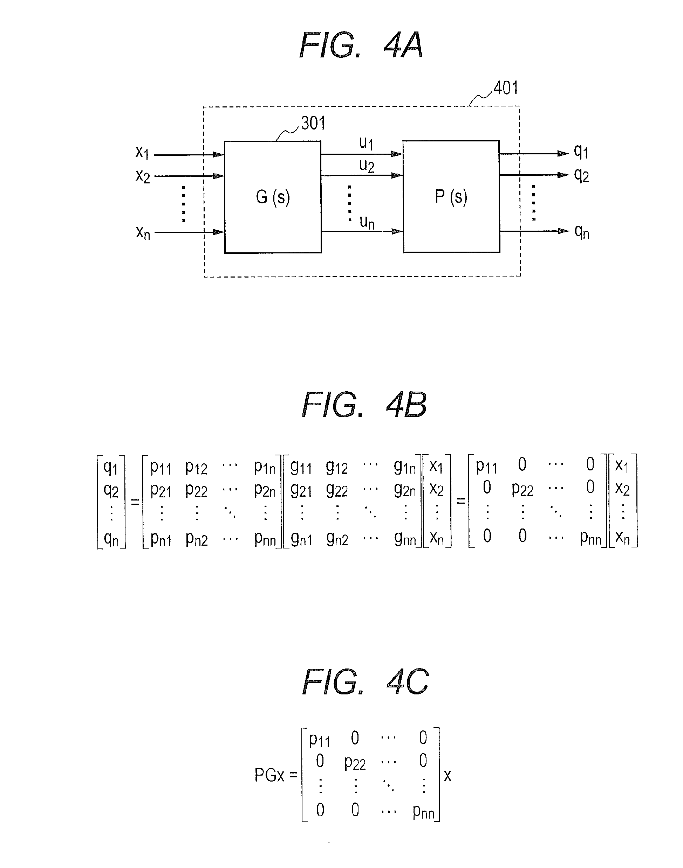

When the non-interference property providing device 301 is connected to the input side of the plant as shown in FIG. 4A, the output q₁, q₂, ..., qₙ to its input x₁, x₂, ..., xₙ is described by the relation between the left side and the second side of the matrix equation shown in FIG. 4B. Reference numeral 401 denotes the multiple input/output system with the non-interference property providing device 301 is connected in series on the input side of the plant.

Here, a requirement that inputs x₁, x₂, ..., xₙ should respectively have influence only on corresponding outputs q₁, q₂, ..., qₙ is imposed. (A condition that x₁ should have influence only on q₁, x₂ should have influence only on q₂, ..., xₙ should have influence only on qₙ is imposed.) That is, a requirement (condition) that qᵢ = pᵢᵢ x xᵢ (i =1, 2, ... n) is imposed. In this case, it is required to satisfy the relation of diagonal matrix and equal sign indicated as the relation between the second side and the right side in the matrix equation shown in FIG. 4B. The relation between inputs x₁, x₂, ..., xₙ and apertures u₁, u₂, ..., uₙ is of interference multiple input/output. However, that between inputs x₁, x₂, ..., xₙ and outputs q₁, q₂, ..., qₙ is of apparent non-interference type.

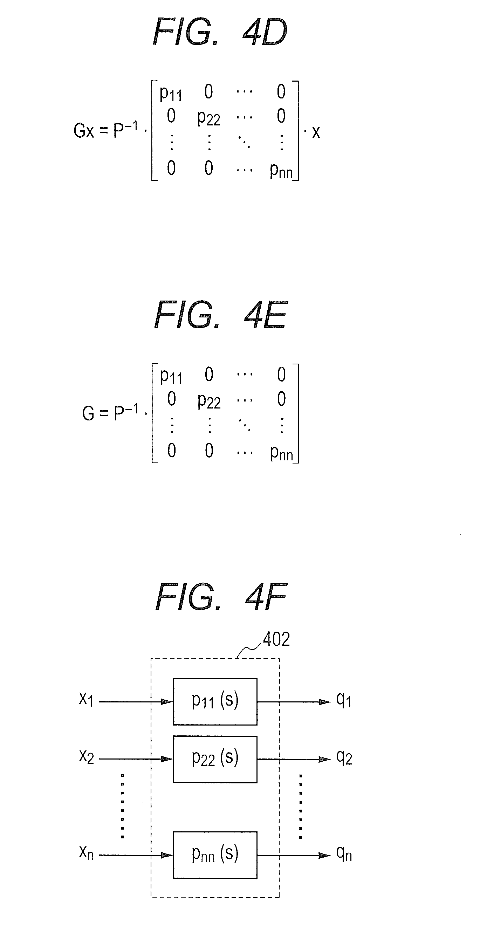

When the relation between the second side and the right side of the matrix equation shown in FIG. 4B is represented by matrix signs P and G and input vector x, the equation shown in FIG. 4C is obtained. When both sides of this equation are multiplied by the inverse matrix of P from the left side, the equation is transformed into the equation shown in FIG. 4D. To make the equation in FIG. 4D identically hold to an arbitrary input (x vector), the coefficient matrixes on both sides of the x vector must be equal, that is, the relation shown in FIG. 4E must hold. The transfer characteristic matrix (G) in FIG. 4E is comprised of the product (right side) of the following: the inverse matrix (P⁻¹) of the transfer characteristic matrix of the plant that indicates the relation between the amount of adjustment of raw material to each reactor and a distribution flow rate; and an appropriate (proper) diagonal matrix.

That is, the right side of the equation in FIG. 4E is comprised of the product of the inverse matrix of P (s) matrix and a diagonal matrix and both relate to the transfer characteristic of the plant. For this reason, a concrete transfer characteristic of the plant desired to be rendered of non-inference type is obtained. Further, an appropriate control condition pertaining to control specification is given and the inverse matrix of the P(s) matrix is uniquely determined. Thus the non-interference property providing device 301 for rendering the input/output characteristics of that plant of non-interference type is designed by the equation in FIG. 4E.

The multiple input/output system 401 of the plant in FIG. 4A with this non-interference property providing device 301 connected thereto is equivalent to FIG. 4F in transfer characteristic. Thus a non-interference multiple input/output system 402 in which inputs x₁, x₂, ..., xₙ respectively have influence only on corresponding outputs q₁, q_{2,} ..., qₙ is obtained.

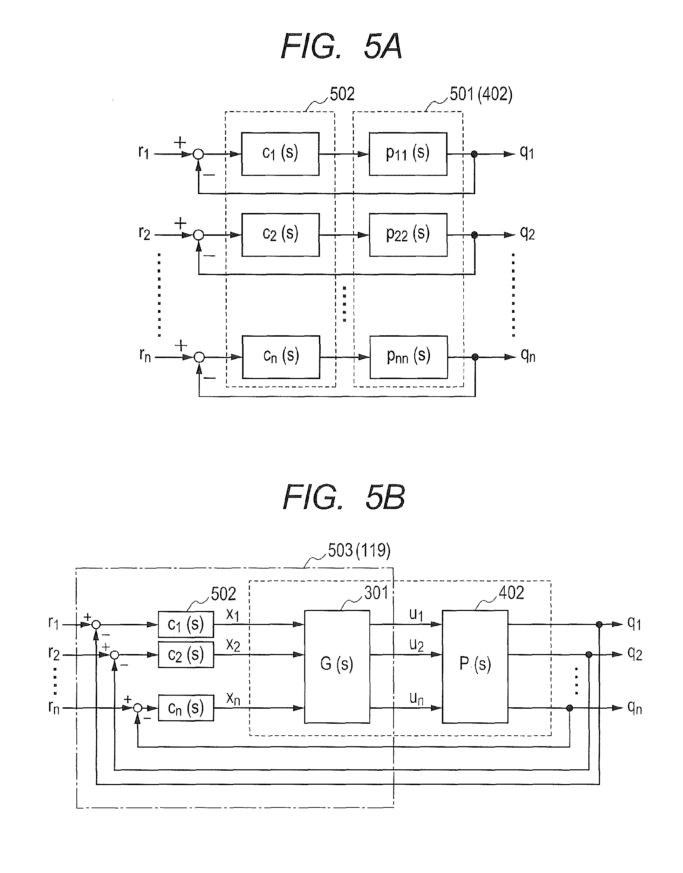

A feedback control law is applied to the plant rendered of non-interference type by connecting the non-interference property providing device as mentioned above. Thus the automatic control system in FIG. 5A is obtained. When a target flow rate r₁, r₂, ..., rₙ of each liquid sending line is determined, in this automatic control system, they are automatically followed. A target flow rate r of each liquid sending line is issued as a request from the user console 120 illustrated in FIG. 1.

Zone 501 encircled with broken line indicates the input/output characteristics of the plant rendered of non-interference type by the non-interference property providing device 301 described with reference to FIGS. 4A to 4F. On the input side, there are connected controllers 502 for apparently independently feedback-controlling each line rendered of non-interference type and each flow rate q₁, q₂, ..., qₙ as output is fed back. Then the plant is controlled by the controllers 502 based on the differences between them and the target flow rates r₁, r₂, ..., rₙ.

Therefore, a stable control system is implemented by properly designing the controller 502 according to the characteristics 501 of the plant rendered of non-interference type. In this stable control system, even though some sort of disturbance is produced in the flow rate of each microreactor, its target flow rate r₁, r₂, ..., rₙ is automatically caused to follow a target value. When this plant control system is depicted in the form of block diagram using the original transfer characteristic P (s) of the plant, it is depicted as in FIG. 5B. The zone 503 encircled with alternate long and short dash line is equivalent to the control device 119 of this plant control system. The control device 119 in FIG. 1 is provided therein with the calculation function indicated by reference numeral 503 in FIG. 5B.

For this plant control system, the following is important: how accurately the transfer characteristics of the plant to be controlled in output response (the flow rate of each liquid sending line) q to input (the aperture of each control valve) u should be modeled and described in the form of transfer matrix P(s). When this transfer matrix P (s) can be accurately obtained form experiment or the like, the proper control system is built by the procedure described with reference to FIG. 4A to FIG. 5B.

However, when a plant is continuously operated for a long time, its input/output characteristics are varied with deterioration or aging of the equipment (also including microreactors, control valves, piping, and the like) comprising the plant. This turns it into an interference multiple input/output system. This situation cannot be designated as disturbance anymore and it must be coped with as expected input/output system parameter fluctuation in the plant. To cope with this, the control apparatus 119 of this plant control system illustrated in FIG. 1 is provided with a system adjustment unit 119a, described next in relation to a second embodiment, having a system identification function for the plant to be controlled.

### (Second Embodiment)

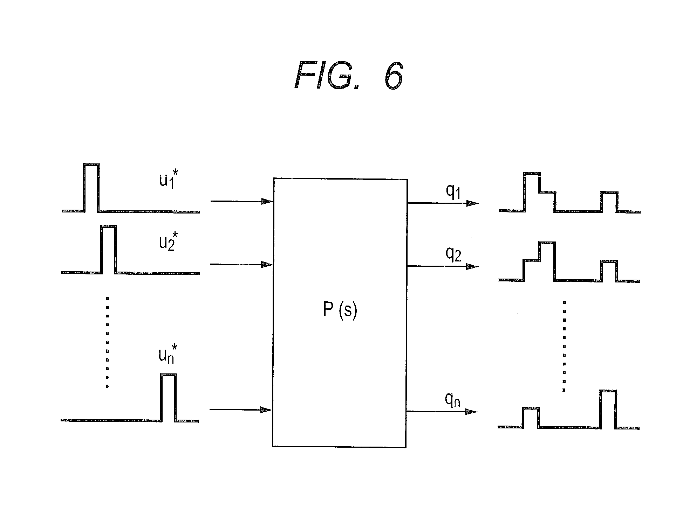

Description will be given to an example of system identification by a system identification unit 119a with reference to FIG. 6. In the second embodiment illustrated in FIG. 6, the control valves 118 on the input side of the individual liquid sending lines are sequentially (in a time sharing manner) opened (fully opened) only for a short time one by one to send liquid. All the responses of the flow rates q of the individual liquid sending lines are simultaneously measured by the distribution flow rate detecting means 117. This measurement is periodically carried out. In FIG. 6, reference codes u*₁ to u*ₙ indicate an open signal of the input of each liquid sending line and q*₁ to q*ₙ indicate the flow rate of each liquid sending line. It is understood from the result of measurement shown in FIG. 6 that liquid sending through each liquid sending line has influence on the flow rate q of each of the other liquid sending lines and this plant has been turned into an interference multiple input/output system by deterioration with age.

In this embodiment, a new parameter of P(s) is identified from the input/output characteristics of the system P(s) indicated by the values of opening u and flow rate q obtained by the above measurement by proper arithmetic processing. Then the control system is updated according to the obtained parameter by the procedure with reference to FIG. 4A to FIG. 5B and the updated input/output characteristics (new transfer characteristic matrix) is set in the control device 19. Thus the optimum plant control system is implemented against the above-mentioned parameter fluctuation. The foregoing is implemented by the system adjustment unit 119a in the control device 19.

This system identification function is also applicable to automatic anomaly and failure diagnoses on a plant. The above system identification is carried out at an appropriate time even when the plant is in operation. If a parameter has extremely fluctuated as compared with past system parameters, it is handled as an anomaly or a failure of the plant. A criterion for determining a plant to be normal when the amount of fluctuation in parameter is within some range and to be anomalous or faulty when it is out of the range must be established in some way by the designer of the plant, needless to add.

Up to this point, embodiments of the invention have been described with the simplest system in which two different kinds of raw materials are mixed or reacted with each other in one step taken as an example. The idea for parallel piping flow rate control is basically identical even in a more complicated plant system in which multiple kinds of raw materials are mixed or reacted with one another in multiple steps and the invention can be applied to such plant systems.

According to the invention, as mentioned up to this point, the following is implemented in a chemical plant whose throughput has been scaled up by numbering-up (parallel piping connection) of microreactors: disturbance (change) in the raw material flow rate of a microreactor can be prevented from having influence on the other microreactors; therefore, the flow rate control on each microreactor can be easily stabilized. An unmanned stable chemical manufacturing process can be achieved by providing the following function: a function of automatically detecting disturbance (change) in raw material flow rate due to the adhesion of an air bubble or the deposit of a reaction product in a microreactor arising from deterioration with age and automatically restoring or adjusting the state of liquid sending.

The invention is not limited to the above-mentioned examples and it will be understood by those skilled in the art that the invention can be variously modified without departing from the scope of the invention described in the claims.

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

## Claims

1. A chemical plant comprising:
a plurality of raw material tanks (101, 102) for storing raw material (A, B); and
a plurality of reactors (107) connected in parallel through branch lines (115, 116) from each raw material tank (101, 102),
wherein each of branched pipes (115, 116) includes:
a distribution flow rate detecting means (117) for detecting the flow rate of raw material flowing through the pipe (115, 116); and
a distribution flow rate adjusting means (118) for adjusting the flow rate of raw material (A, B) flowing through the pipe (115, 116),
wherein there is further provided a control apparatus (119) controlling each the distribution flow rate adjusting means (118) to a predetermined target flow rate using the flow rate in each pipe (115, 116) detected by each the distribution flow rate detecting means (117), and
wherein the control apparatus (119) is provided with a non-interference property providing device (301) rendering a multiple-input multiple-output system inputted with a flow rate detected by each distribution flow rate detecting means (117) and outputting the opening of each distribution flow rate adjusting means (118) of apparent non-interference type.

2. The chemical plant according to Claim 1,
wherein the non-interference property providing device (301) has a transfer characteristic matrix expressed as the product of an inverse matrix of a transfer characteristic matrix representing the relation between the input of raw material to each the reactor (107) and a distribution flow rate detected by the distribution flow rate detecting means (117) and a diagonal matrix, and
wherein the control apparatus (119) uses this non-interference property providing device (301) and provides non-interference properties with respect of each of the reactors (107) and independently controls the distribution flow rate adjusting means (118).

3. The chemical plant according to Claim 2,
wherein a plurality of pumps (103, 104) for sending raw material to the reactors (107), a raw material flow rate detecting means (111, 112) for detecting the flow rate of raw material (A, B), and a raw material flow rate adjusting means (113, 114) for adjusting the flow rate of raw material (A, B) are provided between a bifurcation in a branch line connected to each of the raw material tanks (101, 102) and the raw material tank (101, 102), and
wherein the control apparatus (119) controls the raw material flow rate adjusting means (113, 114) so as to adjust the flow rate of raw material (A, B) based on a detection value detected by each the flow rate detecting means (111, 112).

4. The chemical plant according to Claim 2,
wherein a branch tank (105, 106) is provided at a bifurcation in a branch line connected to each of the raw material tanks (101, 102) and the reactors (107) are connected to the branch tank (105, 106) through a plurality of pipes (115, 116).

5. The chemical plant according to Claim 4,
wherein the raw material tanks (101, 102), the pumps (103, 104), the branch tanks (105, 106), the raw material flow rate adjusting means (113, 114), and the raw material flow rate detecting means (111, 112) are connected in series.

6. The chemical plant according to Claim 2, comprising:
a system adjustment unit (119a) automatically measuring a corresponding distribution flow rate when the flow rate of raw material (A, B) to each reactor (107) is inputted, determining a transfer characteristic matrix from the cause and effect relationship thereof, and adjusting a control law according to this transfer characteristic.
